# EUROPÄISCHE PATENTSCHRIFT

(11) **EP 1 742 332 B1**
(45) Veröffentlichungstag und Bekanntmachung des Hinweises auf die Patenterteilung: **26.08.2009**
(21) Anmeldenummer: 06116052.9
(22) Anmeldetag: 26.06.2006
(51) Int. Cl.: H02K 5/14, H02K 7/14

(54) **Verstellvorrichtung zur Drehrichtungsumkehr**
Adjusting device for reversing of the direction of rotation
Dispositif de déplacement pour l'inversion du sens de rotation

(30) Priorität: 04.07.2005 DE 102005000084
(43) Veröffentlichungstag der Anmeldung: 10.01.2007
(73) Patentinhaber: HILTI Aktiengesellschaft, 9494 Schaan (LI)
(72) Erfinder: Riedl, Reinhard, 86923 Finning (DE); Hartmann, Markus, 87665 Mauerstetten (DE)
(74) Vertreter: Wildi, Roland

(56) Entgegenhaltungen:
- EP-A1- 0 329 249
- EP-A1- 0 790 697
- DE-A1- 3 524 614
- DE-A1- 19 545 651

## Beschreibung

Die Erfindung betrifft ein Elektrohandwerkzeug mit einem elektrischen Motor, der einen Stator mit einem Statorgehäuse aufweist, und einer Verstellvorrichtung zur Drehrichtungsumkehr des Motors. Diese weist einen am Statorgehäuse durch lösbare Verbindungsmittel drehfest angebrachten Kontaktträger auf. An diesem sind Feldkontaktmittel zur elektrischen Verbindung mit einer Statorwicklung des Stators und Festkontaktmittel vorgesehen, die mit den Feldkontaktmitteln elektrisch verbunden sind. Ferner weist die Verstellvorrichtung einen gegenüber dem Kontaktträger verdrehbaren Bürstenträger auf, an dem zwei Kohlenführungen und mit diesen elektrisch verbundene Schaltkontaktmittel vorgesehen sind. Die Schaltkontaktmittel sind dabei jeweils in einer Drehendstellung der Verstellvorrichtung mit den Festkontaktmitteln des Kontaktträgers elektrisch verbindbar.

Derartige Elektrohandwerkzeuge weisen einen Universalmotor mit einem Kommutator auf, der über Kohlebürsten in den Kohleführungen elektrisch kontaktiert wird. Um für beide Drehrichtungen des Motors eine optimale Kommutierung zu erreichen, werden die beiden Kohleführungen zusammen mit dem sie tragenden Bürstenträger beim Umschalten von Rechts- in Linkslauf und umgekehrt mittels einer von Aussen zugänglichen Handhabe in Umfangsrichtung verdreht. Mit dieser Drehbewegung des Bürstenträgers findet gleichzeitig eine Umpolung der Kohlebürsten gegenüber den Festkontaktmitteln statt und somit eine Änderung der Drehrichtung des Motors.

DE 195 45 651 A1 beschreibt ein Elektrohandwerkzeug mit einem reversiblen Elektromotor. Hierzu ist eine Vorrichtung zur Verstellung der Kohlebürsten vorgesehen, die eine Kontaktplatte und einen Bürstenträger aufweist. Die Kontaktplatte ist über eine Steckverbindung ortsfest am Stator des Elektromotors befestigt. Ferner ragen von der Kontaktplatte Hakenelemente ab, die den Bürstenhalter hintergreifen und ihn somit verdrehbar an der Kontaktplatte halten. In die Kontaktplatte ist dabei eine Nut eingelassen, in der im endmontierten Zustand ein schaltbares Kontaktsystem zur Umpolung der Kohlebürsten untergebracht ist, und an deren freien Seite ein absatzförmiger Rand des Bürstenträgers zur Abdichtung anliegt.

Auf diese Weise wird einerseits ein Staubeintritt in das Kontaktsystem vermieden und andererseits der Bürstenträger axial festgelegt. Dabei können der Motor, die Kontaktplatte und der Bürstenträger separat hergestellt und leicht montiert werden, was die Herstellungskosten für das Elektrohandwerkzeug vermindert.

Nach der EP 0790697 weist ein Elektrohandwerkzeug einen elektrischen Motor mit einem Stator und einem Statorgehäuse auf, wobei oberseitig eine Verstelleinrichtung zur Drehrichtungsumkehr des Motors vorhanden ist.

Nach der EP 0329249 weist ein Elektrohandwerkzeug einen elektrischen Motor mit einem Stator und einem Statorgehäuse auf, wobei seitlich eine Verstelleinrichtung zur Drehrichtungsumkehr des Motors vorhanden ist mit einem am Statorgehäuse über lösbare Verbindungsmittel drehfest angebrachten Kontaktträger, der Feldkontaktmittel zur elektrischen Verbindung mit einer Statorwicklung des Stators und Feestkontaktmittel aufweist, die mit den Feldkontaktmittein elektrisch verbunden sind. An einem gegenüber dem Kontaktträger verdrehbarer Bürstenträger sind zwei Kohleführungen und mit diesen elektrisch verbundene Schaltkontaktmittel vorgesehen, die mit den Festkontaktmitteln des Kontaktträgers in elektrischer Verbindung bringbar sind. Das Statorgehäuse weist einen axialen Anschlag für den Bürstenträger auf, in den die Handgriffe des Bürstenträgers eingerastet sind.

Zudem sind nach der DE3524614 die Festkontaktmittel durch jeweils maulförmig angeordnete Kontakte gebildet, zwischen denen jeweils eines der Schaltkontaktmittel einklemmbar ist.

Nachteilig an der bekannten Verstellvorrichtung ist, dass zwischen dem Bürstenträger und der Kontaktplatte ein gewisses Spiel vorgehalten werden muss, um die Verdrehbarkeit zu gewährleisten. Zudem ist die Lage der Kontaktplatte zum Stator, insbesondere bei der Befestigung über Steckverbindungsmittel, ebenfalls einem gewissen Spiel sowie Fertigungstoleranzen unterworfen. Insgesamt ist dadurch die Einbaulage der Kohlebürsten zum Kommutator relativ stark toleranzabhängig, was zu einer schlechteren Kommutierung und einem erhöhten Kohlebürstenverschleiss führen kann.

Der vorliegenden Erfindung liegt die Aufgabe zugrunde, bei einem Elektrohandwerkzeug die genannten Nachteile zu vermeiden und bei kostengünstiger Herstellung eine exakte Einbaulage der Kohlebürsten gegenüber dem Kommutator zu gewährleisten.

Erfindungsgemäss wird die Aufgabe durch ein Elektrohandwerkzeug gemäß Anspruch 1 gelöst. Dadurch, daß das Statorgehäuse einen axialen Anschlag für den Bürstenträger ausformt liegt der Bürstenträger direkt am Statorgehäuse an, wodurch dieses die Einbaulage des Bürstenträgers bestimmt. Das Statorgehäuse kann dabei durch ein Trägergehäuse der Statorwicklung oder durch ein Motorgehäuse, in das der Stator eingebaut ist, gebildet sein. Auf diese Weise kann der Bürstenträger gegenüber dem Stator exakt ausgerichtet werden, wodurch wiederum eine besonders genaue Einbaulage der Kohlenbürsten gegenüber dem Kommutator erreicht wird. Hieraus resultieren eine bessere Kommutierung und ein geringerer Kohlebürstenverschleiss.

Der axiale Anschlag ist dabei durch eine Schleifbahn gebildet, an der die Kohlenführungen verschiebbar anliegen und die an dem Statorgehäuse ausgeformt ist. Hierdurch stützen sich die Kohlenführungen selbst am Statorgehäuse ab, wodurch die Einbaulage der Kohlenbürsten gegenüber dem Kommutator noch exakter festgelegt werden kann. Die Schleifbahn kann dabei durchgehend oder in zwei getrennten Teilabschnitten ausgebildet sein.

Dazu sind an den Kohlenführungen Schrägflächen vorgesehen, die in zwei Drehendstellungen, in denen die beiden entgegengesetzten Drehrichtungen des Motors geschaltet werden, mit entsprechend geneigten Anlegeflächen in Anlage kommen, die jeweils an einem vom Statorgehäuse abragenden Drehanschlag ausgebildet und dabei dem Statorgehäuse zugewandt sind. Hierbei werden die Kohlenführungen gegen den axialen Anschlag gedrückt. Auf diese Weise werden die Kohlenführungen in den beiden Drehendstellungen einerseits in Umfangsrichtung festegelegt und gleichzeitig in axialer Richtung gegen den Kontaktträger vorgespannt. Hierdurch werden besonders stabile und exakte Drehendstellungen der Verstellvorrichtung erzielt, die auch bei im Betrieb am Elektrowerkzeug auftretenden Vibrationen oder Schlägen für eine gute Kommutierung sorgen.

Vorteilhafte Ausgestaltungsformen der Erfindung sind Gegenstand der abhängigen Ansprüche 2-5.

Zudem ist es günstig, wenn zwischen dem Bürstenträger und dem Kontaktträger an zwei sich umfänglich gegenüberstehenden Positionen radial entgegengesetzt wirkende Federmittel vorgesehen sind. Hierdurch kann der Bürstenträger gegenüber dem Kontaktträger und dem Statorgehäuse besonders exakt zentriert werden.

Vorteilhafterweise sind dabei die Federmittel durch zwei abgerundete Enden einer am Bürstenträger gehaltenen Blattfeder gebildet, die jeweils durch eine Durchtrittsöffnung des Bürstenträgers ragen und sich am Kontaktträger abstützen. Hierdurch wird die Zentrierung des Bürstenträgers durch eine kostengünstige Blattfeder erzielt, die durch die Lagerung im Bürstenträger zudem einfach zu montieren ist.

Von Vorteil ist es ferner, wenn die Festkontaktmittel durch maulförmig angeordnete Kontaktzungen gebildet sind, zwischen denen jeweils eines der Schaltkontaktmittel einklemmbar ist. Hierdurch werden besonders stabile elektrische Verbindungen zwischen den Schaltkontaktmitteln und den Festkontaktmitteln erreicht, die auch gegen Vibrationen und Schläge unempfindlich sind.

Von Vorteil ist es zudem, wenn der Bürstenträger auf der vom Stator abgewandten Seite an einem Gerätegehäuse des Elektrohandwerkzeuges axial abgestützt ist. Hierdurch kann der Bürstenträger in sehr einfacher Weise auch gegenüber der zweiten axialen Richtung durch einen Anschlag festgelegt werden, wodurch eine permanente Anlage der Kohlenführungen an der Schleifbahn erzielt werden kann. Dieser Axialanschlag kann dabei beispielsweise durch Gehäuserippen oder Absätze gebildet sein, an die der Bürstenträger bei der Montage in axialer Richtung angelegt wird.

Die Erfindung wird nachstehend anhand eines Ausführungsbeispieles näher erläutert. Es zeigen:
- Fig. 1: eine perspektivische Explosionsdarstellung eines erfindungsgemässen Elektrohandwerkzeuges,
- Fig. 2: eine Draufsicht in Richtung II in Fig. 1 auf einen Kontaktträger des Elektrohandwerkzeuges nach Fig.1,
- Fig. 3: eine um 90° verdrehte Draufsicht in Richtung III in Fig.1 auf einen Bürstenträger des Elektrohandwerkzeuges nach und
- Fig. 4: einen Schnitt durch den Bürstenträger nach Fig. 3 in der Ebene IV-IV,

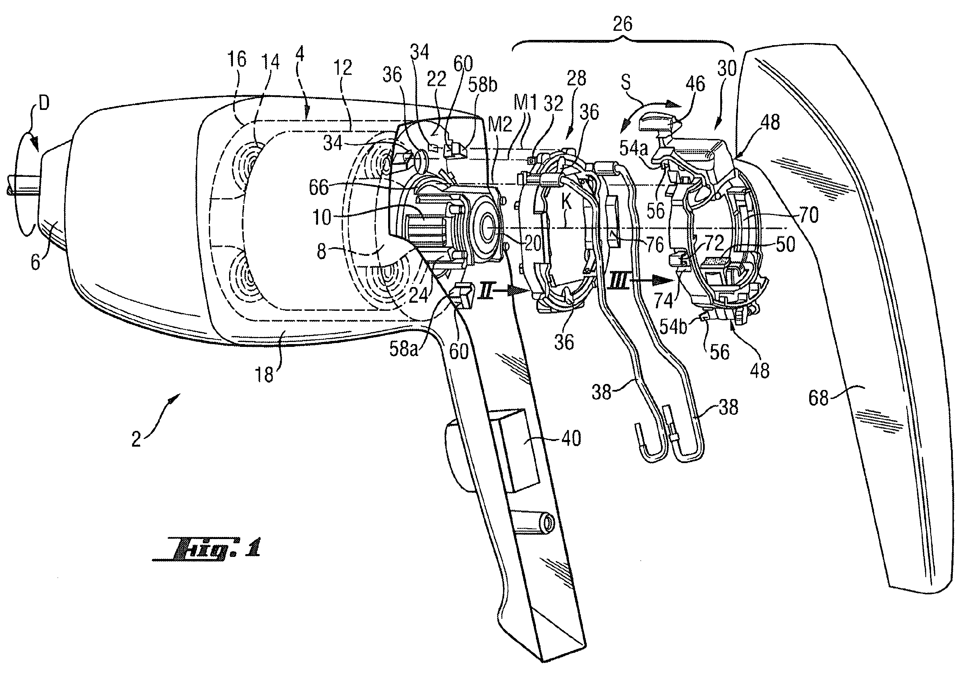

Fig. 1 zeigt ein Elektrohandwerkzeug 2, wie beispielsweise ein kombiniertes Bohr-Schraub-Gerät mit einem elektrischen Motor 4 zum nicht näher dargestellten Antrieb einer Werkzeugaufnahme 6. Der Motor 4 weist einen mit einem Rotor 8 drehfest verbundenen Kommutator 10 auf, der im Betrieb um eine Kommutatorachse K rotiert. Um den Rotor 8 herum ist ein Stator 12 mit einer Statorwicklung 14 angeordnet, der in einem teilweise gestrichelt angedeuteten Statorgehäuse 16 untergebracht ist, das wiederum drehfest in ein Gerätegehäuse 18 des Elektrohandwerkzeuges 2 eingesetzt ist.

Der Kommutator 10 ist an seinem vom Rotor 8 abgewandten Ende an einem Lagerbock 20 gelagert, der durch Halterippen 24 getragen wird, die sich von einer Stirnseite 22 des Statorgehäuses 16 weg erstrecken.

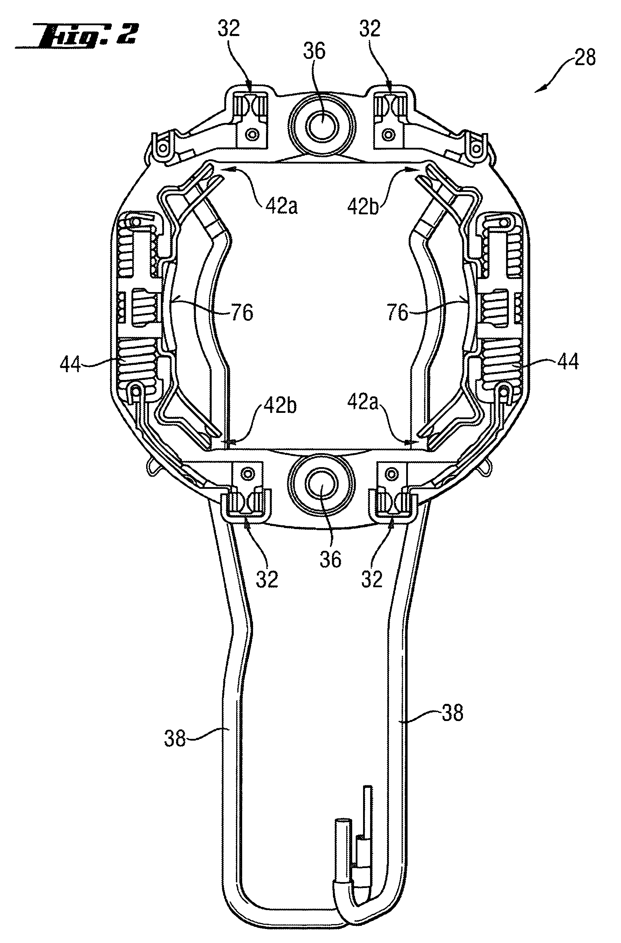

Wie aus Fig. 2 zu entnehmen ist, wird bei der Montage des Elektrohandwerkzeuges 2 eine insgesamt mit 26 bezeichnete Verstellvorrichtung um den Kommutator 10 und die Halterippen 24 herum an der Stirnseite 22 des Lagergehäuses 16 angebracht. Diese weist einen ringförmigen Kontaktträger 28 sowie einen ebenfalls ringförmigen Bürstenträger 30 auf.

Der Kontaktträger 28 wird derart am Statorgehäuse 16 angebracht, dass am Kontaktträger 28 vorgesehene Feldkontaktmittel 32, entsprechend den Montagelinien M1, in Kontaktöffnungen 34 eingesteckt werden, die in der Stirnseite 22 des Statorgehäuses 16 eingelassen sind. In diesen Kontaktöffnungen 34 befinden sich nicht dargestellte Kontaktzungen, die mit der Statorwicklung 14 verbunden sind. Zusätzlich wird der Kontaktträger 28 mittels nicht dargestellter Schrauben an der Stirnseite 22 drehfest festgeschraubt, wobei zur Aufnahme der Schrauben Schraubenbohrungen 36 am Kontaktträger 28 und an der Stirnseite 22 vorgesehen sind.

Wie aus Fig. 2 zu entnehmen ist, sind die Feldkontaktmittel 32 durch maulförmige Kontaktpaare gebildet, zwischen denen die nicht dargestellten Kontaktzungen der Statorwicklung 14 eingeklemmt werden. Die Feldkontaktmittel 32 sind am Kontaktträger 28 sowohl mit Schalterlitzen 38 zur Kontaktierung eines Geräteschalters 40 (siehe Fig.1) als auch mit maulförmigen Festkontaktmitteln 42a, 42b elektrisch verbunden, die in der Öffnung des ringförmigen Kontaktträgers 28 angeordnet und in Umfangsrichtung geöffnet sind. Zwischen den Festkontaktmitteln 42a, 42b und den Feldkontaktmitteln 32 sind dabei Entstörelemente 44 vorgesehen.

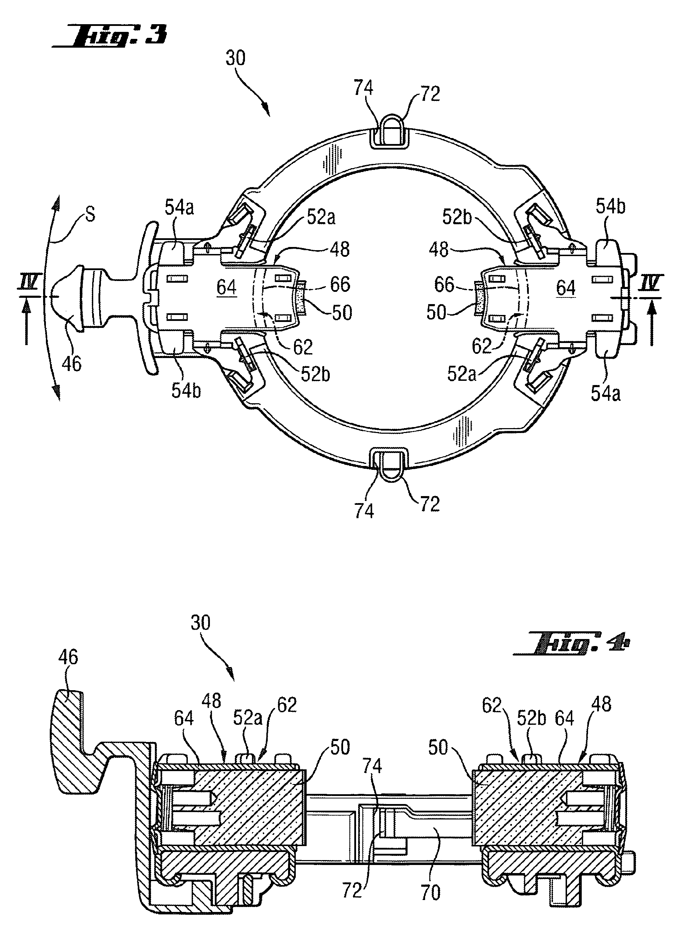

Der in Fig. 3 und 4 näher dargestellte Bürstenträger 30 ist durch Betätigung einer von ausserhalb des Gerätegehäuses 18 zugänglichen Handhabe 46 entlang der Schwenkrichtung S in zwei Drehendstellungen gegenüber dem Stator 12 und dem Kontaktträger 28 verdrehbar. Dabei weist der Bürstenträger 30 zwei Kohlenführungen 48 auf, in denen jeweils eine Kohlenbürste 50 zum Zwecke der Kontaktierung des Kommutators 10 zur Mitte des ringförmigen Bürstenträgers 30 hin vorgespannt ist.

Von den Kohlenführungen 48 ragen dabei in Schwenkrichtung S zu beiden Seiten jeweils ein Schaltkontaktmittel 52a, 52b in Form einer Kontaktzunge ab. Beim Verdrehen des Bürstenträgers 30 wird jeweils das Schaltkontaktmittel 52a; 52b beider Kohlenführungen 48, das in Drehrichtung steht, in das jeweilige entgegen der Drehrichtung stehende maulförmige Festkontaktmittel 42a; 42b geschoben und somit in diesem festgeklemmt.

Ferner steht an jeder Kohlenführung 48 zu beiden Seiten in Schwenkrichtung S jeweils ein Anlegeelement 54a, 54b ab, das eine Schrägfläche 56 (siehe Fig.1) ausbildet. Diese Anlegeelemente 54a, 54b wirken mit jeweils einem von vier Drehanschlägen 58a, 58b zusammen, die, wie aus Fig.1, zu entnehmen ist von der Stirnseite 22 des Statorgehäuses 16 in Richtung des Bürstenträgers 30 in etwa L-förmig abragen. Dabei bilden die Drehanschläge 58a, 58b jeweils eine Anlegefläche 60 aus, die der Stirnseite 22 des Statorgehäuses 16 zugewandt ist.

Durch Betätigung der Handhabe 46 kann somit der Bürstenträger 30 gegenüber dem Statorgehäuse 16 und dem Kontaktträger 28 entlang der Schwenkrichtung S in die beiden Drehendstellungen verdreht werden, in denen die jeweils in Schwenkrichtung S stehenden Anlegeelemente 54a; 54b der Kohlenführungen 48 mit den entsprechenden Drehanschlägen 58a; 58b in Anschlag kommen. Durch die auf diese Weise veränderbare Kontaktierung zwischen den Festkontaktmitteln 42a, 42b und den Schaltkontaktmitteln 52a, 52b wird eine Umpolung der Kohlenbürsten 50 und damit eine Umkehr einer Drehrichtung D des Motors 4 und der Werkzeugaufnahme 6 bewirkt. Gleichzeitig nehmen die Kohlenbürsten 50 dabei in beiden Drehendstellungen eine Position ein, in der für die jeweilige Drehrichtung eine optimale Kommutierung erzielt wird.

Über die gegen die Anlegeflächen 60 gedrückten Schrägflächen 56 wird der Bürstenträger 30 insgesamt in axialer Richtung zum Stator 12 vorgespannt. Hierdurch werden die Kohlenführungen 48 in beiden Drehendstellungen jeweils in einem Stützbereich 62 eines Bodenbleches 64 (siehe Fig.3 und 4 sowie Montagelinie M2) gegen eine Schleifbahn 66 gedrückt, die durch zwei einander gegenüberliegende bogenförmige Ränder zwischen den Halterippen 24 gebildet ist, die somit jeweils als Axialanschlag für eine der Kohlenführungen 48 in Richtung des Stators 12 wirken.

Auf diese Weise werden die Kohlenführungen 48 und mit ihnen die Kohlenbürsten 50 in den beiden Drehendstellungen des Bürstenträgers 30 gegenüber dem Kommutator 10 sowohl in Schwenkrichtung S als auch in axialer Richtung parallel zur Kommutatorachse K exakt festgelegt, wodurch eine sichere Einbaulage der Kohlenbürsten 50 gegenüber dem Kommutator 10 und dadurch eine gleichbleibend gute Kommutierung gewährleistet wird.

Um ausserhalb der Drehendstellungen auch in vom Stator weg gerichteter axialer Richtung eine ausreichende Festlegung zu erzielen, kann der Bürstenträger 30 an entsprechend ausgebildeten, nicht dargestellten Stützelementen des Gerätegehäuses 18 abgestützt sein. Derartige Stützelemente könnten beispielsweise an einem in Fig. 1 dargestellten Gehäusedeckel 68 ausgebildet sein, der die Verstellvorrichtung nach hinten abstützt und dadurch für ein permanentes Anliegen der Kohlenführungen 48 im Stützbereich 62 an der Schleifbahn 66 sorgt.

Ferner ist, wie aus Fig.3 und 4 zu entnehmen ist, eine Blattfeder 70 an dem Bürstenträger 30 gehalten, die mit schleifenförmig abgerundeten Enden 72 zwei sich gegenüberliegenden Ausnehmungen 74 am Bürstenträger 30 radial nach aussen durchragt. Diese stützen sich im eingebauten Zustand einander entgegengesetzt an zwei konkaven Stützflächen 76 ab, die an dem Kontaktträger 28 ausgeformt sind (siehe Fig.2). Auf diese Weise kann der Bürstenträger 30 gegenüber dem Kontaktträger 28 zusätzlich zentriert werden.

In den Drehendstellungen wird zudem durch das Festklemmen der in Schwenkrichtung S bewegten Schaltkontaktmittel 52a; 52b in den jeweiligen Festkontaktmitteln 42a; 42b eine sichere elektrische Verbindung gewährleistet, die gegenüber Vibrationen und Schlägen weitgehend unempfindlich ist.

## Patentansprüche

1. Elektrohandwerkzeug (2) mit einem Gerätegehäuse (18), einem elektrischen Motor (4), der einen Stator (12) mit einem Statorgehäuse (16) aufweist, und einer Verstellvorrichtung (26) zur Drehrichtungsumkehr des Motors (4)
mit einem am. Statorgehäuse (16) über lösbare Verbindungsmittel drehfest angebrachten Kontaktträger (28), der Feldkontaktmittel (32) zur elektrischen Verbindung mit einer Statorwicklung (14) des Stators (12) und Festkontaktmittel (42a, 42b) aufweist, die mit den Feldkontaktmitteln (32) elektrisch verbunden sind, und
mit einem gegenüber dem Kontaktträger (28) verdrehbaren Bürstenträger (30), an dem zwei Kohlenführungen (48) und mit den Kohlenführungen (48) elektrisch verbundene Schaltkontaktmittel (52a, 52b) vorgesehen sind, die mit den Festkontaktmitteln (42a, 42b) des Kontaktträgers (28) in elektrische Verbindung bringbar sind,
wobei das Statorgehäuse (16) einen axialen Anschlag für den Bürstenträger (30) aufweist,
**dadurch gekennzeichnet, dass** der axiale Anschlag durch eine Schleifbahn (66) gebildet ist, an der die Kohlenführungen (48) verschiebbar anliegen und die an dem Statorgehäuse (16) ausgeformt ist, und
dass an den Kohlenführungen (48) . Schrägflächen (56) vorgesehen sind, die in zwei Drehendstellungen mit entsprechend geneigten Anlegeflächen (60) in Anlage kommen, die jeweils an einem vom Statorgehäuse (16) abragenden Drehanschlag (58a, 58b) ausgebildet und dabei dem Statorgehäuse (16) zugewandt sind, wobei die Kohlenführungen (48) gegen den axialen Anschlag gedrückt werden.

2. Elektrohandwerkzeug nach Anspruch 1, **dadurch gekennzeichnet, dass** zwischen dem Bürstenträger (30) und dem Kontaktträger (28) an zwei sich umfänglich gegenüberstehenden Positionen radial entgegengesetzt wirkende Federmittel vorgesehen sind.

3. Elektrohandwerkzeug nach Anspruch 2, **dadurch gekennzeichnet, dass** die Federmittel durch zwei abgerundete Enden (72) einer am Bürstenträger (30) gehaltenen Blattfeder (70) gebildet sind, die durch jeweils eine Durchtrittsöffnung (74) des Bürstenträgers (30) ragen und sich am Kontaktträger (28) abstützen.

4. Elektrohandwerkzeug nach einem der Ansprüche 1 bis 3, **dadurch gekennzeichnet, dass** die Festkontaktmittel (42a, 42b) durch jeweils maulförmig angeordnete Kontakte gebildet sind, zwischen denen jeweils eines der Schaltkontaktmittel (52a, 52b) einklemmbar ist.

5. Elektrohandwerkzeug nach einem der Ansprüche 1 bis 4, **dadurch gekennzeichnet, dass** der Bürstenträger (30) auf der vom Stator (12) abgewandten Seite an dem Gerätegehäuse (18) des Elektrohandwerkzeuges (2) axial abgestützt ist.

## Claims

1. Electrical hand-held power tool (2) with a tool housing (18), an electric motor (4) including a stator (12) with a stator housing (16) and an adjusting device (25) for reversing a rotational direction of the electric motor (4),
with a contact carrier (28) fixedly securable on the stator housing (16) by releasable connection means, which exhibits field contact means (32) for an electrical connection with a stator winding (14) of the stator (12) and fixed contact means (42a, 42b) electrically connected with the field contact means (32) and
with a rotable brush carrier (30) being rotatable relative to the contact carrier (28), and provided with two carbon guides (48) and switching contact means (52a, 52b) electrically connected with the carbon guides (48), the switching contact means can be brought into electrical contact with the fixed contact means (42a, 42b) of the contact carrier (28),
whereby the stator housing (16) exhibits an axial stop for the brush carrier (30),
**characterised in that** the axial stop is formed by a slide path (66) along which the carbon guides (48) are displaceable and which are formed in the stator housing (16), where in the carbon guides (48) are provided with oblique surfaces (56) which abut in two rotational end positions correspondingly inclined contact surfaces (60), formed on respective rotational stops (58a, 58b) projecting from the stator housing (16) and in this turning towards the stator housing (16), whereby the carbon guides (48) are pressed against the axial stop.

2. Electrical hand-held power tool according to claim 1, **characterised in that** spring means acting radially opposite are provided between the brush carrier (30) and the contact carrier (28), at two circumferentially opposite positions.

3. Electrical hand-held power tool according to claim 2, **characterised in that** the the spring means are formed by two rounded ends (72) of a leaf spring (70) supported on the brush carrier (30) the rounded ends (72) extend through respective opening (74) of the brush carrier (30) and are supported on the contact carrier (28).

4. Electrical hand-held power tool according to one of the claims 1 to 3, **characterised in that** the fixed contact means (42a, 42b) are formed by respective jaw-shaped contacts, between which respective contacts of the switchable contact means (52a, 52b) can be clamped.

5. Electrical hand-held power tool according to one of the claims 1 to 4, **characterised in that** the brush carrier (30) is axially supported, at its end remote from the stator (12), against the tool housing (18) of the electric hand tool (2).

## Revendications

1. Appareil électrique portatif (2) comprenant un carter d'appareil (18), un moteur électrique (4) qui comporte un stator (12) avec un carter de stator (16), et un dispositif de déplacement (26) pour l'inversion du sens de rotation du moteur (4), comprenant un porte-contacts (28) qui est solidarisé en rotation au carter de stator (16) par l'intermédiaire de moyens de liaison détachables et qui comporte des moyens de contact de champ (32) pour la liaison électrique avec un enroulement de stator (14) du stator (12) et des moyens de contact fixe (42a, 42b) qui sont reliés électriquement aux moyens de contact de champ (32), et comprenant un porte-balais (30) qui est apte à tourner par rapport au porte-contacts (28) et sur lequel sont prévus deux guide-charbon (48) et des moyens de contact de commutation (52a, 52b), lesquels sont reliés électriquement aux guide-charbon (48) et peuvent être amenés en liaison électrique avec les moyens de contact fixe (42a, 42b) du porte-contacts (28), le carter de stator (16) comportant une butée axiale pour le porte-balais (30), **caractérisé en ce que** la butée axiale est formée par une piste de glissement (66) contre laquelle les guide-ctarbon (48) sont en appui glissant et qui est ménagée sur le carter de stator (16), et **en ce que** sur les guide-charbon (48) sont prévues des surfaces inclinées (56) qui, dans deux positions de rotation extrêmes, viennent en contact avec des surfaces d'appui d'inclinaison correspondante (60), lesquelles sont chacune ménagées sur une butée de rotation (58a, 58b) faisant saillie sur le carter de stator (L6) et sont ainsi tournées vers le carter de stator (7.6), les guide-charbon (48) étant poussés contre la butée axiale.

2. Appareil électrique portatif selon la revendication 1, **caractérisé en ce que** deux moyens élastiques à action radiale contraire sont prévus dans des positions circonférentielles opposées entre le porte-balais (30) et le porte-contacts (28).

3. Appareil électrique portatif selon la revendication 2, **caractérisé en ce que** les moyens élastiques sont formés par des extrémités arrondies (72) d'un ressort à lame (70) maintenu sur le porte-balais (30), lesquelles extrémités dépassent chacune à travers une ouverture traversante (74) du porte-balais (30) et prennent appui sur le porte-contacts (28).

4. Appareil électrique portatif selon une des revendications 1 à 3, **caractérisé en ce que** les moyens de contact fixe (42a, 42b) sont formés chacun par des contacts qui sont disposés en forme de mâchoires et entre lesquels peut être serré un des moyens de contact de commutation (52a, 52b).

5. Appareil électrique portatif selon une des revendications 1 à 4, **caractérisé en ce que**, sur le côté opposé au stator (12), le porte-balais (30) prend appui axialement sur le carter d'appareil (18) de l'appareil électrique portatif (2).
